# EUROPEAN PATENT APPLICATION

(11) **EP 4 844 550 A1**
(43) Date of publication of application: **25.11.2026**
(21) Application number: 24918232.0
(22) Date of filing: 28.11.2024
(51) Int. Cl.: G06F 3/0481, G06F 3/0484, G06F 9/451

(54) **INTERACTION METHOD, APPARATUS, COMPUTER-READABLE STORAGE MEDIUM, AND COMPUTER PROGRAM PRODUCT**

(30) Priority: 19.01.2024 CN 202410080170
(71) Applicant: Beijing Zitiao Network Technology Co., Ltd., Beijing 100190 (CN); Douyin Vision Co., Ltd., Beijing 100041 (CN)
(72) Inventor: YANG, Xintao, Beijing 100028 (CN); ZHU, Yongrui, Beijing 100028 (CN)
(74) Representative: Grünecker Patent- und Rechtsanwälte PartG mbB
(86) International application number: PCT/CN2024/135082
(87) International publication number: WO 2025/152624

(57) **Abstract**

The present disclosure relates to an interaction method and apparatus, a computer-readable storage medium, and a computer program product, which relate to the field of computer technologies. The interaction method includes: displaying a first virtual object and at least one second virtual object in a first interface of a first application, where the at least one second virtual object is in one-to-one correspondence with at least one application; controlling the first virtual object to interact with a target virtual object of the at least one second virtual object in response to a specified operation of a user; displaying a second interface of a second application corresponding to the target virtual object in response to the interacting between the first virtual object and the target virtual object; and sending a first resource to the user.

## Description

### CROSS-REFERENCE TO RELATED APPLICATION(S)

The present application is based on and claims priority of Chinese application for invention No. 202410080170.9, filed on January 19, 2024, the disclosure of which is hereby incorporated into this application by reference in its entirety.

### TECHNICAL FIELD

The present disclosure relates to the field of computer technologies and, in particular, to an interaction method, an apparatus, a computer-readable storage medium, and a computer program product.

### BACKGROUND

In various applications, in order to improve the usage rate, access rate or click through rate, resources may be sent to users through a resource distribution interface. Each resource to be sent may be set with a sending condition. For example, after the user browses a specified page for a specified time period, an associated resource may be sent to the user; or, after the user shares a specified object displayed on a specified page or in a specified application with other users, an associated resource may also be sent to the user.

### SUMMARY

The Summary is provided to briefly introduce concepts, and these concepts will be described in detail in the following Detailed Description. The Summary is not intended to identify essential features or necessary features of the claimed technical solutions, nor is it intended to limit the scope of the claimed technical solutions.

According to some embodiments of the present disclosure, an interaction method is provided, which includes: displaying a first virtual object and at least one second virtual object in a first interface of a first application, where the at least one second virtual object is in one-to-one correspondence with at least one application; controlling the first virtual object to interact with a target virtual object of the at least one second virtual object in response to a specified operation of a user; displaying a second interface of a second application corresponding to the target virtual object in response to the interacting between the first virtual object and the target virtual object; and sending a first resource to the user.

According to some embodiments of the present disclosure, an electronic device is provided, which includes: a memory; and a processor coupled to the memory, where the processor is configured to perform the interaction method of any embodiment described in the present disclosure based on instructions stored in the memory.

According to some embodiments of the present disclosure, a computer-readable storage medium is provided, where a computer program is stored on the computer-readable storage medium, and when the computer program is executed by a processor, the interaction method of any embodiment described in the present disclosure is executed.

According to some embodiments of the present disclosure, a computer program product is provided, which, when running on a computer, causes the computer to implement the interaction method of any embodiment described in the present disclosure.

According to some embodiments of the present disclosure, a computer program is provided, which includes: instructions that, when executed by a processor, cause the processor to perform the interaction method of any embodiment described in the present disclosure.

Other features, aspects, and advantages of the present disclosure will become apparent through the following detailed description of exemplary embodiments of the present disclosure with reference to the drawings.

### BRIEF DESCRIPTION OF THE DRAWINGS

Preferred embodiments of the present disclosure are explained hereunder with reference to the drawings. The drawings explained here are used to provide a further understanding of the present disclosure, and each drawing, together with the following specific description, is included in and forms a part of this specification to explain the present disclosure. It should be understood that the drawings in the following description relate only to some embodiments of the present disclosure and are not intended to limit the present disclosure. In the drawings:
Fig. 1 shows a schematic flowchart of an interaction method according to some embodiments of the present disclosure.
Fig. 2 shows a schematic diagram of a first interface according to some embodiments of the present disclosure.
FIGs. 3A to 3D show schematic diagrams of a first interface according to some other embodiments of the present disclosure.
FIGs. 4A and 4B show schematic diagrams of a second interface according to some embodiments of the present disclosure.
Fig. 5 shows a schematic structural diagram of an interaction apparatus according to some embodiments of the present disclosure.
Fig. 6 shows a schematic structural diagram of an electronic device according to some embodiments of the present disclosure.
Fig. 7 shows a block diagram of an example structure of a computer system that may be adopted in embodiments of the present disclosure.

It should be understood that, for ease of description, the sizes of various parts shown in the drawings are not necessarily drawn according to actual proportional relationships. The same or similar reference numerals are used in the drawings to denote the same or similar components. Therefore, once an item is defined in one drawing, it may not be further discussed in subsequent drawings.

### DETAILED DESCRIPTION OF EMBODIMENTS

The technical solutions in the embodiments of the present disclosure will be described clearly and comprehensively with reference to the drawings in the embodiments of the present disclosure, but it is clear that the described embodiments are only some embodiments of the present disclosure, rather than all the embodiments. The following description of the embodiments is actually only illustrative and in no way serves as any limitation to the present disclosure and its application or use. It should be understood that the present disclosure may be implemented in various forms and should not be construed as limited to the embodiments set forth herein.

It should be understood that various steps described in method implementations of the present disclosure may be executed in different orders and/or in parallel. In addition, the method implementations may include additional steps and/or omit execution of the steps shown. The scope of the present disclosure will not be limited in this regard. Unless otherwise specifically stated, relative arrangements, numerical expressions and values of components and steps set forth in these embodiments should be construed as merely exemplary and do not limit the scope of the present disclosure.

The term "include/comprise" and its variants used in the present disclosure mean open terms that at least include the following elements/features but do not exclude other elements/features, that is, "include/comprise but not limited to". In addition, the term "contain" and its variants used in the present disclosure mean open terms that at least contain the following elements/features but do not exclude other elements/features, that is, "contain but not limited to". Therefore, include/comprise and contain are synonymous. The term "based on" means "at least partially based on".

Reference to "one embodiment", "some embodiments" or "an embodiment" throughout the specification means that a specific feature, structure or characteristic described in combination with the embodiment is included in at least one embodiment of the present disclosure. For example, the term "one embodiment" means "at least one embodiment"; the term "another embodiment" means "at least one other embodiment"; the term "some embodiments" means "at least some embodiments". Moreover, appearances of the phrases "in one embodiment", "in some embodiments" or "in an embodiment" in various places throughout the specification are not necessarily all referring to the same embodiment, but may also refer to the same embodiment.

It should be noted that concepts such as "first" and "second" as mentioned in the present disclosure are only used to distinguish different apparatuses, modules or units, and are not used to limit the sequence of functions performed by these apparatuses, modules or units or interdependence therebetween. Unless otherwise specified, concepts such as "first" and "second" are not intended to imply that the objects so described must be in a given order in terms of time, space, ranking or in any other way.

It should be noted that modifications of "one" and "multiple" as mentioned in the present disclosure are illustrative rather than restrictive, and those skilled in the art should understand that unless otherwise clearly indicated in the context, they should be construed as "one or multiple".

Names of messages or information exchanged between multiple apparatuses in the implementations of the present disclosure are only used for illustrative purposes, and are not used to limit the scope of these messages or information.

Embodiments of the present disclosure are described in detail hereunder with reference to the drawings, but the present disclosure is not limited to these specific embodiments. These specific embodiments may be combined with each other, and the same or similar concepts or processes may not be repeated in some embodiments. In addition, in at least one embodiment, a specific feature, structure or characteristic may be combined in any suitable manner that will be clear to those of ordinary skill in the art from the present disclosure.

In related technologies, a condition for sending a resource to a user is often limited to an interior of an application. The embodiments of the present disclosure provide a solution of sending a resource to a user across applications, that is, triggering a start of a resource sending process in a first application and completing sending of the resource in a second application, so as to guide the user to log in to multiple applications, thereby improving the usage rate of the applications.

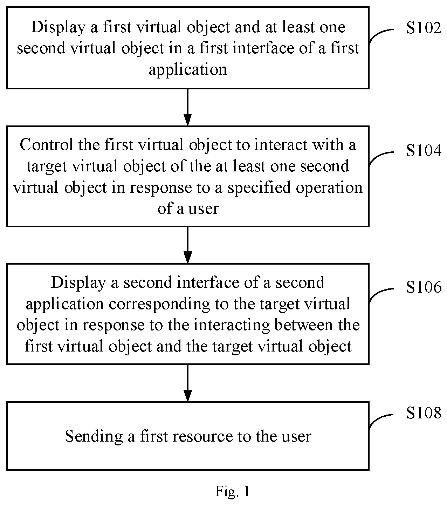

Fig. 1 shows a schematic flowchart of an interaction method according to some embodiments of the present disclosure. As shown in Fig. 1, the interaction method of this embodiment includes steps S102 to S108.

In step S102, a first virtual object and at least one second virtual object are displayed in a first interface of a first application, where the at least one second virtual object is in one-to-one correspondence with at least one application.

The first application may be any type of application in a mobile terminal such as a smart phone, a notebook computer, a personal digital assistant (PDA), a tablet personal computer (Tablet PC), a portable media player (PMP), a vehicle-mounted terminal (such as a vehicle navigation terminal), a wearable device, etc., and a fixed terminal such as a digital TV, a desktop computer, etc. The first interface is an interface in the first application, and is used to trigger a process of sending a resource to a user.

The first virtual object may be a static image or a dynamic image; or, it may also be a user-interactive object that may feedback to a user's operation, for example, after being clicked by the user, the first virtual object may perform a specified action or expression. The first virtual object may be presented in any image, such as a human image, an animal image, etc.

The second virtual object may also be a static image, a dynamic image or a user-interactive object, which may also be presented in any image. In some embodiments, in order to clearly distinguish the first virtual object from the second virtual object, the second virtual object may be different in type of image from the first virtual object. For example, the first virtual object may be a human image or an animal image, and the second virtual object may be a building image. Specific images of different second virtual objects may be different to indicate that they correspond to different applications. In order to more clearly represent a correspondence between the second virtual image and the application, the second virtual image may include an identification of the application, for example, at least one of an application name, an application icon, an application color scheme, etc.

In a case where there are multiple applications corresponding to the second virtual object, the second virtual object may include a second virtual object corresponding to the first application, and the target virtual object is not the second virtual object corresponding to the first application.

In step S104, the first virtual object is controlled to interact with a target virtual object of the at least one second virtual object in response to a specified operation of a user.

The specified operation of the user includes, for example, at least one of a trigger operation on a specified control, a trigger operation on the target virtual object, a specified gesture operation, or an operation of shaking a terminal of the user. Other types of operations may be used according to needs, which will not be repeated here.

The target virtual object refers to a second virtual object that is triggered after the user performs the specified operation, and the triggering is completed through the interaction between the first virtual object and the second virtual object. The target virtual object may be determined before the user performs the specified operation, for example, randomly determined, or filtered and determined based on a specified condition, and the user may know the result through display of the first interface (for example, a special identification is added to the target virtual object), or the result may not be informed to the user; or, the target virtual object may also be determined in response to the user performing the specified operation, for example, after the user performs the specified operation, the target virtual object is randomly selected from the second virtual objects, or the target virtual object is selected from the second virtual objects based on a certain triggering probability (or weight).

After the specified operation is triggered, the first virtual object may automatically interact with the target virtual object. Interaction effects between the first virtual object and the second virtual object may be reflected in various visual manners. For example, the first virtual object may be controlled to move to an area where the target virtual object of the at least one second virtual object is located; for another example, the first virtual object may be connected to the second virtual object; for yet another example, visual effects are added to the first virtual object and the second virtual object. Other interaction manners may be used in the art according to needs, which will not be repeated here.

In step S106, a second interface of a second application corresponding to the target virtual object is displayed in response to the interacting between the first virtual object and the target virtual object.

In response to the interaction between the first virtual object and the target virtual object, the second interface may be directly or indirectly triggered to be displayed. An indirect triggering manner is, for example, sending a jump prompt to the user before jumping to the second application, and then displaying the second application after the user confirms the jump.

The second application is different from the first application, but both of them are located in the terminal of the user. Through a jump function between applications, the first interface in the first application may be jumped to the second interface in the second application. The second interface may be similar to the first interface, for example, it may also include the first virtual object and the at least one second virtual object. Thus, the user may also trigger a resource sending process in the second application through a specified operation.

In step S108, a first resource is sent to the user.

After the second application is displayed, it indicates that the user has completed the jump of the application, and at this time, the first resource may be sent to the user. The first resource or other resources mentioned in the present disclosure may be virtual resources or real resources. Sending the first resource to the user may be allocating the first resource to the user, for example, the user may view the allocation result from the resources obtained by the user, the user's account or other locations.

In addition, the user may be prompted that the first resource is sent through visual content. For example, text that the user has obtained the first resource is displayed, or the cumulative resources obtained by the user are displayed through a progress bar.

The first resource may include a resource corresponding to the second application, for example, each application is preset with a specified number of resources, and when the user uses the interaction between the first virtual object and the target virtual object to jump to the second application (that is, trigger the second application), the specified number of resources corresponding to the second application may be obtained. Certainly, the amount of resources corresponding to each application may be different and may not be specified in advance, but as the number of triggered applications increases, the number of resources corresponding to the triggered applications increases sequentially. The implementation of the first resource is not limited to the above examples, and details are not repeated here.

In the above embodiment, the interaction between the virtual objects is triggered in the first application to trigger the display of the second application corresponding to the target virtual object, so as to send the resource to the user in the second application. Thus, the usage rate of the second application may be improved through the guidance of the first application. Moreover, the manner of using the interaction of virtual elements for triggering reduces the user's understanding cost and improves the user's information acquisition efficiency, thereby improving the convenience of the user operation.

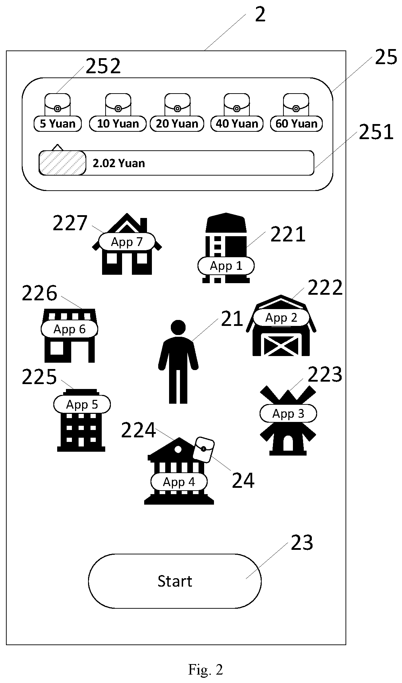

Fig. 2 shows a schematic diagram of a first interface according to some embodiments of the present disclosure. As shown in Fig. 2, the first interface 2 includes a first virtual object 21 and second virtual objects 221 to 227 corresponding to applications 1 to 7. The first virtual object 21 is exemplarily represented by a human image, and the second virtual objects 221 to 227 are exemplarily represented by building images. According to needs, those skilled in the art may also use other images to represent these virtual objects, which will not be repeated here.

The first interface 2 may further include a trigger control 23, and the specified operation is, for example, an operation of the user triggering the control 23. In this case, the target virtual object to be triggered is not specified by the user, but is automatically determined. Two determination strategies are exemplarily described below.

In some embodiments, the first virtual object is controlled to interact with the target virtual object of the at least one second virtual object based on a triggering probability corresponding to each of the at least one second virtual object in response to the specified operation of the user. The triggering probability may be determined based on login information of the user in the at least one application, the login information may be the number of logins or login duration within a specified time period, for example, the number of logins or login duration within a recent specified time period, and the triggering probability is negatively correlated with the number of logins or the login duration. That is, an application that is not frequently used by the user is preferentially triggered as much as possible. Alternatively, the at least one second virtual object correspond to equal triggering probabilities, that is, the application to be triggered is randomly determined.

In some embodiments, the target virtual object corresponds to an application that the user has not logged in to within a recent specified time period. The application that the user has not logged in to within the recent specified time period may be regarded as an inactive application, and by directly determining the second virtual object corresponding to the inactive application as the target virtual object, the jump to the inactive application may be preferentially triggered, thereby improving the usage rate of the inactive application. In this case, an identification of an additional resource may be displayed in the area where the target virtual object is located. After the second application is displayed, the additional resource may be sent to the user. For example, in the first interface 2 of Fig. 2, the user has not logged in to the application 4 within the recent specified time period, then the second virtual object 224 corresponding to the application 4 may be directly determined as the target virtual object, and the identification 24 of the additional resource is additionally displayed on the second virtual object 224. Thus, after the user performs the specified operation, the application 4 is jumped to, and after the application 4 is displayed, the first resource and the additional resource are sent to the user.

The first interface 2 may further include a resource sending progress control 25, which includes a progress bar 251, and the progress bar 251 is used to represent cumulative resources that have been sent to the user. Each time a resource is sent to the user, the cumulative resources may be updated, so that the display result of the progress bar 251 is more accurate. The progress control 25 may further include a progress node indicator, such as a progress node indicator 252. In this way, each time the cumulative resources reach the amount corresponding to the progress node indicator, the user may extract resources.

In order to improve the overall usage rate of various applications, the target virtual object is a second virtual object corresponding to an application that has not been triggered. In order to distinguish, the second virtual object corresponding to the triggered application and the second virtual object corresponding to the application that has not been triggered may be made to be in different display states. In some embodiments, each of the at least one second virtual object is in a first display state or a second display state, and the first virtual object is controlled to interact with the target virtual object in the first display state of the at least one second virtual object in response to the specified operation of the user, where after the first resource is sent to the user, the target virtual object is in the second display state.

Different display states are distinguished by brightness, for example, the brightness of the second virtual object in the first display state is lower than the brightness in the second display state. In this way, a task of "lighting up" the second virtual object is intuitively conveyed to the user, so as to trigger the application.

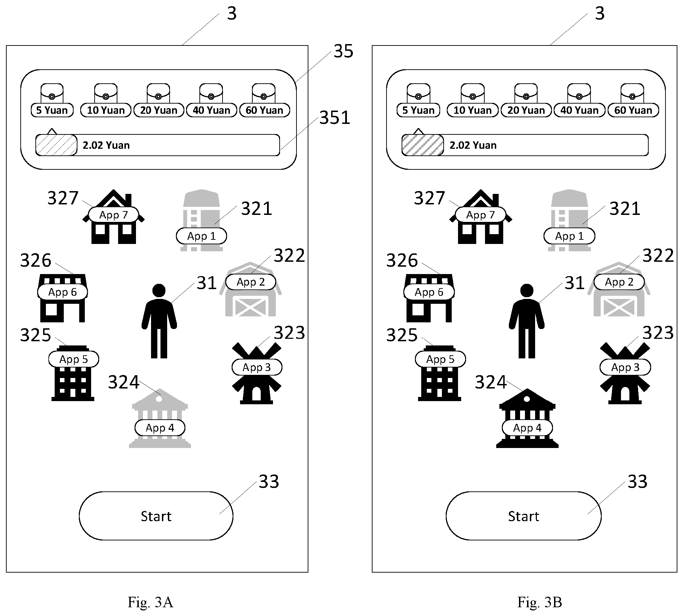

FIGS. 3A to 3B show schematic diagrams of a first interface according to other embodiments of the present disclosure. As shown in Fig. 3A, the interface layout of the first interface 3 is similar to that of the first interface 2, but the display states of some second virtual objects in the first interface 3 are different from those of other second virtual objects. It is assumed that in the first interface 3, the applications 3, 5, 6, 7 are triggered, and the second virtual objects 323, 325, 326, 327 corresponding to these applications are in the second display state (represented by dark color), for example, representing a lit (triggered) state; the applications 1, 2, 4 are not triggered, and the second virtual objects 321, 322, 324 corresponding to these applications are in the first display state (represented by light color), for example, representing an unlit (untriggered) state.

After the user triggers the control 33, the first virtual object 31 is controlled to interact with the target virtual object 324 to trigger the display of the application 4, and after the application 4 is displayed, the first resource is sent to the user. If the first interface 3 is displayed again, the second virtual object 324 in the first interface 3 may be in the second display state, as shown in Fig. 3B.

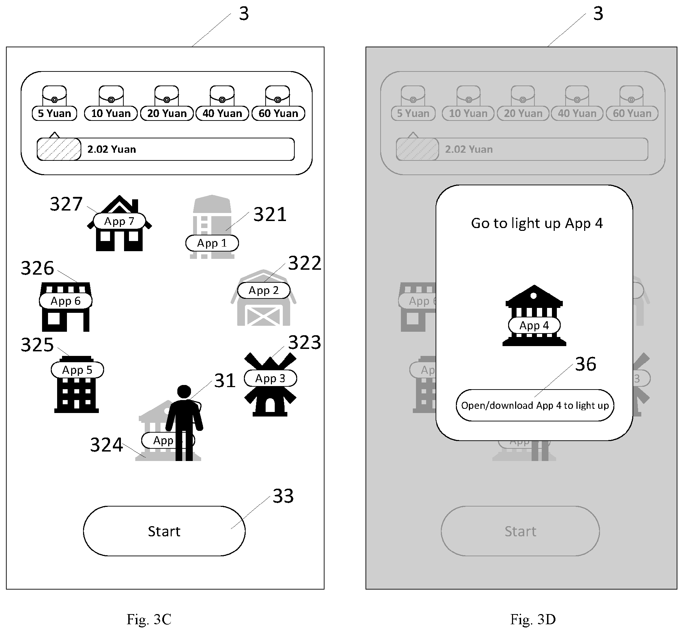

Before the second application is displayed, an inquiry may be sent to the user, and in a case where the user's confirmation is obtained, the second application continues to be displayed. For example, a jump control is displayed in response to the interaction between the first virtual object and the target virtual object, and the second interface of the second application corresponding to the target virtual object is displayed in response to the jump control being triggered. For example, as shown in Fig. 3C, after the user triggers the control 33, the first virtual object 31 may be controlled to move to the area where the target virtual object 324 is located. Then, as shown in Fig. 3D, the jump control 36 is displayed on the upper layer of the first interface 3 for the user to confirm. In response to the user clicking the jump control 36, the second application may be displayed. If the second application is not installed in the user's terminal, a download page or a download link of the second application may be displayed.

The second application may also include an interface similar to the first interface of the first application. In some embodiments, the second interface includes the first virtual object and at least one second virtual object, and the target virtual object is in the first display state in the first interface and in the second display state in the second interface. For each second virtual object other than the target virtual object, the display state of the second virtual object in the first interface is consistent with the display state of the second virtual object in the second interface. Thus, the user may continue to trigger the target virtual object in the second application to trigger the display of a third application.

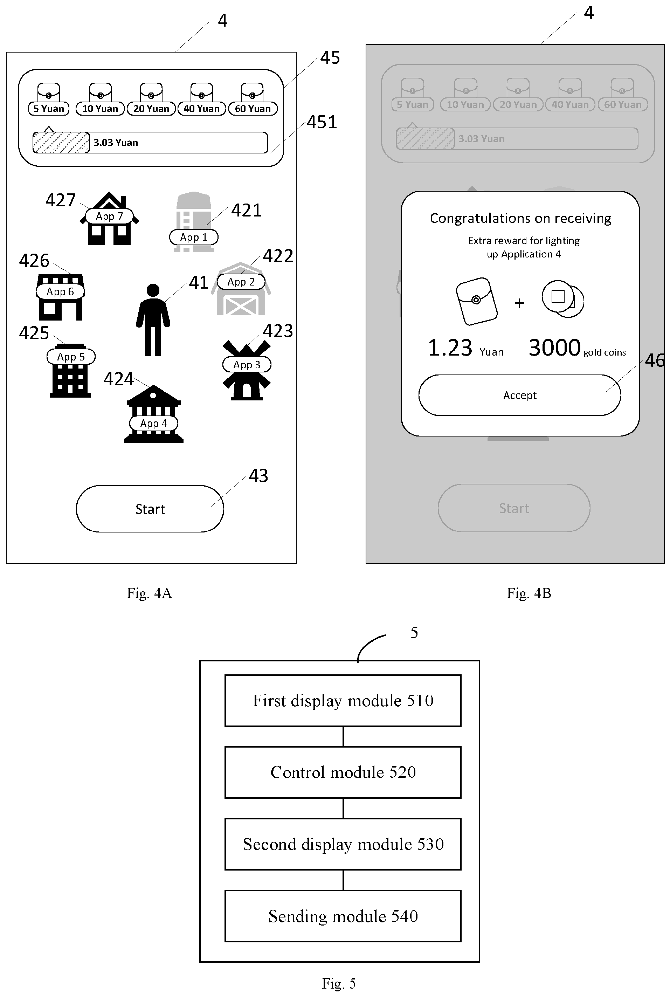

Fig. 4A shows a schematic diagram of a second interface according to some embodiments of the present disclosure. As shown in Fig. 4A, the layout of the second interface 4 of the application 4 may be similar to the layout in the first interface 3. However, since the user jumps from the first interface to the second interface, the resource is sent to the user, and the resource value corresponding to the progress bar 451 of the progress control 45 of the second interface 4 is increased compared with the resource value corresponding to the progress bar 351 of the progress control 35 of the first interface 3 in Fig. 3A, so as to reflect the result of sending the first resource to the user.

In addition, in the first interface 3 and the second interface 4, the display states of the second virtual objects 321, 322, 323, 325, 326, 327 are kept consistent, but the display state of the second virtual object corresponding to the application 4 is changed, that is, the effect of being "lit up" is achieved. In the second interface 4, the user may still trigger the next round of resource sending process. For example, by triggering the control 43, the first virtual object 41 is further interacted with the target virtual object in the second virtual object 421 or 422 that is not lit (that is, not triggered), so as to trigger the display of the application 1 or the application 2. Similarly, the application 1 or the application 2 may also have similar interfaces and functions, which will not be repeated here.

In some embodiments, in a case where the additional resource is also sent to the user, the additional resource may also be displayed through a floating layer. As shown in Fig. 4B, the floating layer may be displayed on the upper layer of the second interface 4, and the content of the additional resource and the confirmation control 46 are displayed in the floating layer. In response to the user triggering the confirmation control 46, the floating layer may be eliminated, and the interface shown in Fig. 4A is displayed.

In the second interface, a second resource is sent to the user in response to the at least one second virtual object all being in the second display state. For example, in a case where the second virtual objects 421 to 427 are all "lit up", the second resource may be additionally sent to the user. Thus, the overall usage rate of multiple applications may be improved.

Embodiments of related apparatuses and devices of the present disclosure are described below with reference to FIGS. 5 to 7.

Fig. 5 shows a schematic structural diagram of an interaction apparatus according to some embodiments of the present disclosure. As shown in Fig. 5, the interaction apparatus 5 of this embodiment includes: a first display module 510, which is configured to display a first virtual object and at least one second virtual object in a first interface of a first application, where the at least one second virtual object is in one-to-one correspondence with at least one application; a control module 520, which is configured to control the first virtual object to interact with a target virtual object of the at least one second virtual object in response to a specified operation of a user; a second display module 530, which is configured to display a second interface of a second application corresponding to the target virtual object in response to the interacting between the first virtual object and the target virtual object; and a sending module 540, which is configured to send a first resource to the user.

In some embodiments, each of the at least one second virtual object is in a first display state or a second display state, and the control module 520 is further configured to: control the first virtual object to interact with the target virtual object in the first display state of the at least one second virtual object in response to the specified operation of the user, where after the first resource is sent to the user, the target virtual object is in the second display state.

In some embodiments, the second interface includes the first virtual object and the at least one second virtual object, and the target virtual object is in the first display state in the first interface and in the second display state in the second interface; for each second virtual object other than the target virtual object, the display state of the second virtual object in the first interface is consistent with the display state of the second virtual object in the second interface.

In some embodiments, the control module 520 is further configured to: control the first virtual object to interact with the target virtual object of the at least one second virtual object based on a triggering probability corresponding to each of the at least one second virtual object in response to the specified operation of the user, where the triggering probability is determined based on login information of the user in the at least one application, or the at least one second virtual object correspond to equal triggering probabilities.

In some embodiments, the target virtual object corresponds to an application that the user has not logged in to within a recent specified time period.

In some embodiments, the first display module 510 is further configured to display an identification of an additional resource in an area where the target virtual object is located, and the sending module 540 is further configured to send the additional resource to the user in response to the display of the second application.

In some embodiments, the sending module 540 is further configured to: send a second resource to the user in the second interface in response to the at least one second virtual object all being in the second display state.

In some embodiments, brightness of the second virtual object in the first display state is lower than brightness of the second virtual object in the second display state.

In some embodiments, the second display module 530 is further configured to: display a jump control in response to the interacting between the first virtual object and the target virtual object, and display the second interface of the second application corresponding to the target virtual object in response to the jump control being triggered.

In some embodiments, the control module 520 is further configured to: control the first virtual object to move to an area where the target virtual object of the at least one second virtual object is located.

In some embodiments, the specified operation includes at least one of a trigger operation on a specified control, a trigger operation on the target virtual object, a specified gesture operation, or an operation of shaking a terminal of the user.

It should be noted that the above units are only logical modules divided according to the specific functions implemented by them, and are not used to limit the specific implementation manners, for example, they may be implemented in a manner of software, hardware, or a combination of software and hardware. During actual implementation, the above units may be implemented as independent physical entities, or may be implemented by a single entity (for example, a processor (CPU or DSP, etc.), an integrated circuit, etc.). In addition, the above units are indicated by dotted lines in the drawings to indicate that these units may not actually exist, and the operations/functions implemented by them may be implemented by the processing circuit itself.

In addition, although not shown, the device may also include a memory, which may store various information generated in the operation of the device and each unit included in the device, programs and data for the operation, data to be sent by the communication unit, etc. The memory may be a volatile memory and/or a non-volatile memory. For example, the memory may include, but is not limited to, a random access memory (RAM), a dynamic random access memory (DRAM), a static random access memory (SRAM), a read-only memory (ROM), and a flash memory. Certainly, the memory may also be located outside the device. Optionally, although not shown, the device may also include a communication unit, which may be used to communicate with other apparatuses. In an example, the communication unit may be implemented in any suitable manner known in the art, for example, including communication components such as an antenna array and/or a radio frequency link, various types of interfaces, communication units, etc. Details will not be described here. In addition, the device may further include other components not shown, such as a radio frequency link, a baseband processing unit, a network interface, a processor, a controller, etc. Details will not be described here.

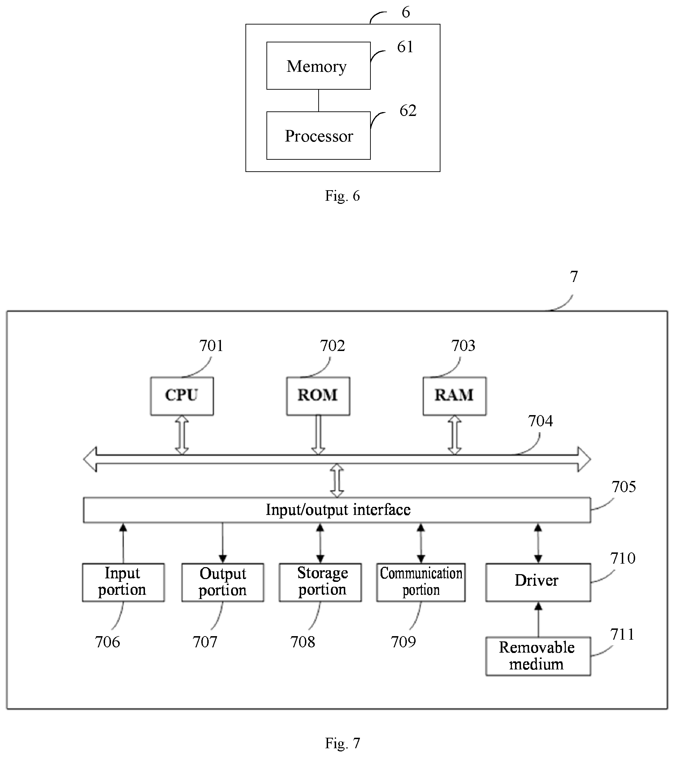

Some embodiments of the present disclosure further provide an electronic device. Fig. 6 shows a schematic structural diagram of an electronic device according to some embodiments of the present disclosure. For example, in some embodiments, the electronic device 6 may be various types of devices, for example, it may include, but is not limited to, a mobile terminal such as a mobile phone, a notebook computer, a digital broadcasting receiver, a personal digital assistant (PDA), a tablet personal computer (PAD), a portable media player (PMP), a vehicle-mounted terminal (such as a vehicle navigation terminal), etc., and a fixed terminal such as a digital TV, a desktop computer, etc. For example, the electronic device 6 may include a display panel for displaying data and/or execution results utilized in the solution according to the present disclosure. For example, the display panel may be various shapes, such as a rectangular panel, an elliptical panel, or a polygonal panel. In addition, the display panel may not only be a flat panel, but also a curved panel or even a spherical panel.

As shown in Fig. 6, the electronic device 6 of this embodiment includes: a memory 61 and a processor 62 coupled to the memory 61. It should be noted that the components of the electronic device 6 shown in Fig. 6 are only exemplary and non-restrictive, and the electronic device 6 may also have other components according to actual application needs. The processor 62 may control other components in the electronic device 6 to perform desired functions.

In some embodiments, the memory 61 is used to store at least one computer-readable instruction. When the processor 62 is used to run the computer-readable instructions, the method according to any of the above embodiments is implemented when the computer-readable instructions are run by the processor 62. For the specific implementation and related explanation content of each step of the method, reference may be made to the above embodiments, and the repeated parts will not be described here.

For example, the processor 62 and the memory 61 may directly or indirectly communicate with each other. For example, the processor 62 and the memory 61 may communicate through a network. The network may include a wireless network, a wired network, and/or any combination of a wireless network and a wired network. The processor 62 and the memory 61 may also communicate with each other through a system bus, which is not limited in the present disclosure.

For example, the processor 62 may be embodied as various appropriate processors, processing apparatuses, etc., such as a central processing unit (CPU), a graphics processing unit (GPU), a network processor (NP), etc.; it may also be a digital signal processor (DSP), an application specific integrated circuit (ASIC), a field programmable gate array (FPGA) or other programmable logic devices, a discrete gate or transistor logic device, or a discrete hardware component. The central processing unit (CPU) may be an X86 or ARM architecture or the like. For example, the memory 61 may include any combination of various forms of computer-readable storage media, such as a volatile memory and/or a non-volatile memory. The memory 61 may include, for example, a system memory, and the system memory stores, for example, an operating system, an application, a boot loader, a database, and other programs. Various applications, various data, etc. may also be stored in the storage medium.

In addition, according to some embodiments of the present disclosure, in the case where various operations/processes according to the present disclosure are implemented by software and/or firmware, a program constituting the software may be installed from a storage medium or a network to a computer system having a dedicated hardware structure, such as the computer system 70 shown in Fig. 7, and the computer system may perform various functions, including the functions as mentioned above, when various programs are installed. Fig. 7 is a block diagram showing an example structure of a computer system that may be adopted in embodiments of the present disclosure.

In Fig. 7, a central processing unit (CPU) 701 executes various processes according to a program stored in a read-only memory (ROM) 702 or a program loaded from a storage part 708 into a random access memory (RAM) 703. In the RAM 703, data required when the CPU 701 executes various processes and the like is also stored as needed. The central processing unit is only exemplary, and it may be other types of processors, such as the various processors mentioned above. The ROM 702, the RAM 703, and the storage part 708 may be various forms of computer-readable storage media, as described below. It should be noted that although the ROM 702, the RAM 703, and the storage apparatus 708 are shown separately in Fig. 7, at least one of them may be combined or located in the same or different memories or storage modules.

The CPU 701, the ROM 702, and the RAM 703 are connected to each other via a bus 704. An input/output interface 705 is also connected to the bus 704.

The following components are connected to the input/output interface 705: an input part 706 such as a touch screen, a touchpad, a keyboard, a mouse, an image sensor, a microphone, an accelerometer, and a gyroscope; an output part 707 including a display such as a cathode ray tube (CRT), a liquid crystal display (LCD), a speaker, a vibrator, etc.; the storage part 708 including a hard disk, a magnetic tape, etc.; and a communication part 709 including a network interface card such as a LAN card, a modem, etc. The communication part 709 allows communication processing to be performed via a network such as the Internet. It is easy to understand that although the apparatuses or modules in the computer system 70 are shown in Fig. 7 to communicate through the bus 704, they may also communicate through a network or other means, where the network may include a wireless network, a wired network, and/or any combination of a wireless network and a wired network.

According to needs, a driver 710 is also connected to the input/output interface 705. A removable medium 711 such as a magnetic disk, an optical disc, a magneto-optical disc, a semiconductor memory, etc. is installed on the driver 710 as needed, so that a computer program read therefrom is installed into the storage part 708 as needed.

In the case where the above-mentioned series of processes are implemented by software, a program constituting the software may be installed from a network such as the Internet or a storage medium such as the removable medium 711.

According to an embodiment of the present disclosure, the process described above with reference to the flowchart may be implemented as a computer software program. For example, an embodiment of the present disclosure includes a computer program product, which includes a computer program carried on a computer-readable medium, where the computer program contains program codes for executing the method shown in the flowchart. In such an embodiment, the computer program may be downloaded and installed from a network through the communication apparatus 709, or installed from the storage apparatus 708, or installed from the ROM 702. When the computer program is executed by the CPU 701, the above-mentioned functions defined in the method of the embodiment of the present disclosure are executed.

It should be noted that in the context of the present disclosure, a computer-readable medium may be a tangible medium that may contain or store a program for use by or in combination with an instruction execution system, apparatus or device. The computer-readable medium may be a computer-readable signal medium, a computer-readable storage medium, or any combination of the two. The computer-readable storage medium may be, for example, but is not limited to: an electrical, magnetic, optical, electromagnetic, infrared, or semi-conductive system, apparatus or device, or any suitable combination of the above. More specific examples of the computer-readable storage medium may include, but are not limited to: an electrically connected portable computer magnetic disk with at least one wire, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, and the program may be used by or in combination with an instruction execution system, apparatus or device. In the present disclosure, a computer-readable signal medium may include a data signal propagated in a baseband or as a part of a carrier wave, and computer-readable program codes are carried therein. This propagated data signal may take multiple forms, including, but not limited to, an electromagnetic signal, an optical signal, or any suitable combination of the above. The computer-readable signal medium may also be any computer-readable medium other than the computer-readable storage medium, and the computer-readable signal medium may send, propagate or transmit a program used by or in combination with an instruction execution system, apparatus or device. The program codes contained on the computer-readable medium may be transmitted by any suitable medium, including, but not limited to: a wire, an optical cable, a radio frequency (RF), etc., or any suitable combination of the above.

The above-mentioned computer-readable medium may be included in the above-mentioned electronic device, or it may exist alone without being assembled into the electronic device.

In some embodiments, there is further provided a computer program, including: instructions, where the instructions, when executed by a processor, cause the processor to execute the method of any of the above embodiments. For example, the instructions may be embodied as computer program codes.

In the embodiments of the present disclosure, computer program codes for executing the operations of the present disclosure may be written in at least one programming language or a combination thereof, where the programming languages include, but are not limited to, an object-oriented programming language such as Java, Smalltalk, C++, and further include conventional procedural programming languages such as "C" language or similar programming languages. The program codes may be executed entirely on a user computer, partly on the user computer, as a stand-alone software package, partly on the user computer and partly on a remote computer, or entirely on the remote computer or server. In the case of involving the remote computer, the remote computer may be connected to the user computer through any kind of network (including a local area network (LAN) or a wide area network (WAN)), or it may be connected to an external computer (for example, connected by using Internet provided by an Internet service provider).

The flowcharts and block diagrams in the drawings illustrate the possibly implemented architectures, functions, and operations of the system, method and computer program product according to various embodiments of the present disclosure. In this regard, each block in the flowchart or block diagram may represent a module, program segment, or part of code, which contains at least one executable instruction for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules, components or units involved in the embodiments of the present disclosure may be implemented in a manner of software, and may also be implemented in a manner of hardware. Among them, the names of the modules, components or units do not constitute a limitation on the modules, components or units pe se under certain circumstances.

The functions described above herein may be at least partially performed by at least one hardware logic component. For example, without limitation, exemplary hardware logic components that may be used include: a field programmable gate array (FPGA), an application specific integrated circuit (ASIC), an application specific standard product (ASSP), a system on chip (SOC), a complex programmable logical device (CPLD), etc.

According to some embodiments of the present disclosure, there is provided a computer program, including: instructions that, when executed by a processor, cause the processor to execute the interaction method of any of the embodiments described in the present disclosure.

According to some embodiments of the present disclosure, there is provided a computer program product, including instructions that, when executed by a processor, implement the interaction method of any of the embodiments described in the present disclosure.

The above description is only some embodiments of the present disclosure and an explanation of the technical principles employed. Those skilled in the art should understand that the scope of disclosure involved in the present disclosure is not limited to the technical solutions formed by the specific combination of the above-mentioned technical features, and should also cover, without departing from the above-mentioned disclosed concept, other technical solutions formed by any combination of the above-mentioned technical features or their equivalent features. For example, a technical solution formed by replacing the above features with technical features with similar functions disclosed in the present disclosure (but not limited thereto).

In the description provided herein, numerous specific details are set forth. However, it is understood that the embodiments of the present disclosure may be implemented without these specific details. In other instances, well-known methods, structures and techniques are not shown in detail in order not to obscure an understanding of this description.

Additionally, although operations are depicted in a particular order, it is not required that such operations should be performed in the particular order shown or in a sequential order. Under certain circumstances, multitasking and parallel processing may be advantageous. Likewise, although the above discussion includes several specific implementation details, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although some specific embodiments of the present disclosure have been described in detail by way of example, those skilled in the art should understand that the above examples are only for illustration, and are not intended to limit the scope of the present disclosure. Those skilled in the art should understand that the above embodiments may be modified without departing from the scope and spirit of the present disclosure. The scope of the present disclosure is defined by the appended claims.

## Claims

1. An interaction method, comprising:
displaying a first virtual object and at least one second virtual object in a first interface of a first application, wherein the at least one second virtual object are in one-to-one correspondence with at least one application;
controlling the first virtual object to interact with a target virtual object of the at least one second virtual object in response to a specified operation of a user;
displaying a second interface of a second application corresponding to the target virtual object in response to the interacting between the first virtual object and the target virtual object; and
sending a first resource to the user.

2. The interaction method of claim 1, wherein each of the at least one second virtual object is in a first display state or a second display state, and the controlling the first virtual object to interact with a target virtual object of the at least one second virtual object in response to a specified operation of a user comprises:
controlling the first virtual object to interact with the target virtual object in the first display state of the at least one second virtual object in response to the specified operation of the user, wherein after the first resource is sent to the user, the target virtual object is in the second display state.

3. The interaction method of claim 2, wherein:
the second interface comprises the first virtual object and the at least one second virtual object, the target virtual object is in the first display state in the first interface and in the second display state in the second interface; and
for each second virtual object other than the target virtual object, a display state of the second virtual object in the first interface is consistent with a display state of the second virtual object in the second interface.

4. The interaction method of any of claims 1 to 3, wherein the controlling the first virtual object to interact with a target virtual object among the at least one second virtual object in response to a specified operation of a user comprises:
controlling the first virtual object to interact with the target virtual object of the at least one second virtual object based on a triggering probability corresponding to each of the at least one second virtual object in response to the specified operation of the user, wherein the triggering probability is determined based on login information of the user in the at least one application, or the at least one second virtual object correspond to equal triggering probabilities.

5. The interaction method of any of claims 1 to 4, wherein the target virtual object corresponds to an application that the user has not logged in to within a recent specified time period.

6. The interaction method of claim 5, further comprising:
displaying an identification of an additional resource in an area wherein the target virtual object is located; and
sending the additional resource to the user in response to the displaying of the second application.

7. The interaction method of claim 2 or 3, further comprising:
sending a second resource to the user in the second interface in response to the at least one second virtual object being in the second display state.

8. The interaction method of claim 2 or 3, wherein brightness of the second virtual object in the first display state is lower than brightness of the second virtual object in the second display state.

9. The interaction method of any of claims 1 to 8, wherein the displaying a second interface of a second application corresponding to the target virtual object in response to the interacting between the first virtual object and the target virtual object comprises:
displaying a jump control in response to the interacting between the first virtual object and the target virtual object; and
displaying the second interface of the second application corresponding to the target virtual object in response to the jump control being triggered.

10. The interaction method of any of claims 1 to 9, wherein the controlling the first virtual object to interact with a target virtual object of the at least one second virtual object comprises:
controlling the first virtual object to move to an area where the target virtual object of the at least one second virtual object is located.

11. The interaction method of any of claims 1 to 10, wherein the specified operation comprises at least one of a trigger operation on a specified control, a trigger operation on the target virtual object, a specified gesture operation, or an operation of shaking a terminal of the user.

12. An electronic device, comprising:
a memory; and
a processor coupled to the memory, wherein the processor is configured to perform, based on instructions stored in the memory, the interaction method of any of claims 1 to 11.

13. A computer-readable storage medium, wherein a computer program is stored on the computer-readable storage medium, and when the computer program is executed by a processor, the interaction method of any of claims 1 to 11 is implemented.

14. A computer program product, which, when running on a computer, causes the computer to implement the interaction method of any of claims 1 to 11.

15. A computer program, comprising:
instructions that, when executed by a processor, cause the processor to execute the interaction method of any of claims 1 to 11.
